# EUROPEAN PATENT APPLICATION

(11) **EP 2 865 364 A2**
(43) Date of publication of application: **29.04.2015**
(21) Application number: 14182911.9
(22) Date of filing: 29.08.2014
(51) Int. Cl.: A61H 3/04

(54) **Manually propelled vehicle**

(30) Priority: 30.08.2013 JP 2013180236
(71) Applicant: Funai Electric Co., Ltd., Daito city Osaka 574-0013 (JP)
(72) Inventor: Kojina, Atsushi, Osaka, Osaka 574-0013 (JP)
(74) Representative: Osha Liang SARL

(57) **Abstract**

A manually propelled vehicle (1) having an assist function that assists walking of a user includes a vehicle body (10), a wheel system (30) for moving the vehicle body, a sensor that detects an operating force, a power driver that supplies power to the wheel system (30) based on the operating force, a motion sensor that detects a movement of the vehicle body according to the operating force detected by the sensor; and a controller that controls the power driver, wherein, when the user operates the manually propelled vehicle (1) while the assist function is deactivated, the controller activates the assist function based on the movement of the vehicle body (10) detected by the motion sensor.

## Description

### [FIELD OF THE INVENTION]

The present invention relates generally to a manually propelled vehicle (e.g., ambulatory assist vehicles, baby carriages, dollies, wheelchairs, and the like).

### [Related Art]

In recent years, manually propelled vehicles (e.g., ambulatory assist vehicles to support elderly people with a weak physique or people with trouble walking, to go out) with human-power assist functions (so-called assisted functions) have been studied.

A conventional manually propelled vehicle comprises a sensor for detecting a movement and position of its own vehicle body, a sensor for detecting an operating force applied from a user, and the assist function determines assistance (assisting force) according to the information from these sensors. Accordingly, when there is an error such as a failure in the sensor, the assist mechanism does not function properly and there is a risk that an assisting force that differs from the operation of the user is applied.

A sensor failure determination device for determining a failure of each sensor above has been proposed for secure assistance by the assist mechanism (e.g., refer to Patent Document 1).

The sensor failure determination device according to Patent Document 1 is used in a vehicle where an acceleration sensor is attached, and when the vehicle is traveling or moving at a speed faster than a predetermined speed, it uses the characteristics of the acceleration sensor in which variation in output values becomes larger than a constant value. That is, the vehicle may comprise an arithmetic circuit that generates a failure detection signal by determining that the acceleration sensor has failed when variation of the output from the acceleration sensor is equal to or less than the predetermined value while the vehicle is traveling at a speed of not less than the predetermined value. A malfunction of the assisting function due to the failure of the acceleration sensor can be prevented by providing the sensor failure determination device of the sensor.

### [DOCUMENTS OF THE RELATED ART]

### [Patent Documents]

[Patent Document 1] Japanese Unexamined Patent Application Publication 2002-22766.

However, in the sensor failure determination device according to a configuration in Patent Document 1, the vehicle must be traveling at a speed equal to or faster than a fixed speed, and therefore, the failure of the acceleration sensor cannot be determined until reaching that speed. In other words, while the vehicle speed has not reached the fixed speed, the acceleration sensor failure cannot be determined even if the acceleration sensor has failed, and the assist function may not be able to be operated safely.

Further, because the sensor failure determination device described above is to detect a sensor failure, it is difficult to detect an abnormal condition (e.g., falling, abandonment, or the like) of the user, and therefore, there is a risk of not being able to assist the user safely.

### [SUMMARY OF THE INVENTION]

One or more embodiments of the present invention provide a manually propelled vehicle that can assist the operation of the user while ensuring safety.

According to one or more embodiments, a manually propelled vehicle having an assist function that assists walking of a user may comprise: a vehicle body; a wheel system for moving the vehicle body; sensor that detects an operating force; power driver that supplies power (drive force or assisting force) to the wheel system based on the operating force; a motion sensor that detects a movement of the vehicle body according to the operating force detected by the sensor; and controller that controls the power driver, wherein, when the user operates the manually propelled vehicle while the assist function is deactivated, the controller may activate the assist function based on the movement of the vehicle body detected by the motion sensor.

By having such a configuration, for example, a failure in the sensor, the motion sensor, and the operation state of the manually propelled vehicle can be detected. Thus, one or more embodiments of the invention can prevent use when the assist function is not normal. Accordingly, reliable assistance can be performed while ensuring the safety of a user.

According to one or more embodiments, the manually propelled vehicle may further comprise a rotation angle sensor that detects rotation of the wheel system (e.g. that detects rotation of a wheel of the wheel system), wherein the controller may activate the assist function when the rotation angle sensor detects that the wheel system has rotated (e.g. that detects that a wheel of the wheel system has rotated) a predetermined amount from a stationary state of the manually propelled vehicle. By configuring in this manner, for example, after the manually propelled vehicle has started traveling or moving from the stationary state, a failure can be accurately found before traveling a specific distance. Accordingly, even when a failure is found immediately after operation is started by the user, one or more embodiments of the invention can reduce a burden on the user because of the reduced speed and operating amount of the vehicle.

According to one or more embodiments, the manually propelled vehicle may further comprise a rotation angle sensor that detects rotation of the wheel system, wherein the controller activates the assist function after a predetermined time has elapsed from a stationary state of the manually propelled vehicle. By configuring in this manner, for example, even when a failure is found immediately after operation is started by the user, one or more embodiments of the invention can reduce a burden on the user because of the reduced speed and operating amount of the vehicle.

According to one or more embodiments, the manually propelled vehicle may further comprise a switch that cuts off the power from the power driver so that the power is not transferred to the wheel system when the assist function is deactivated. By having such configuration, for example, one or more embodiments of the invention can reduce a burden on the user when the assist function is activated.

According to one or more embodiments, the controller may detect the operating force detected by the sensor or the movement of the vehicle body detected by the motion sensor while the assist function is activated, and deactivate the assist function when a periodic fluctuation associated with walking by the user is not verified in at least one of either the detected operating force or the movement of the vehicle body. By having such configuration, for example, even when user is operating the manually propelled vehicle by using the assist function, one or more embodiments of the invention can accurately detect a failure in the sensor and (or) the motion sensor.

According to one or more embodiments, the manually propelled vehicle may further comprise a grip for the user to grip while operating the manually propelled vehicle; and a grip sensor that detects when the user grips the grip, wherein if the grip sensor does not detect gripping of the grip and the motion sensor does not detect movement of the vehicle body, the controller may activate the assist function when the operating force detected by the sensor is within a predetermined range. By having such configuration, for example, one or more embodiments of the invention can detect a failure in the sensor while the manually propelled vehicle is completely stationary, and also prevent the user from using the manually propelled vehicle with a failure.

According to one or more embodiments, the manually propelled vehicle may further comprise a grip for the user to grip while operating the manually propelled vehicle; and a grip sensor that detects when the user grips the grip, wherein if the grip sensor does not detect gripping of the grip, the controller may deactivate the assist function when the motion sensor repeatedly and continuously detects movement of the vehicle body for a predetermined number of times. By having such configuration, for example, one or more embodiments of the invention can detect a failure in the motion sensor while the manually propelled vehicle is completely stationary, and also prevent the user from using the manually propelled vehicle with a failure.

According to one or more embodiments, a manually propelled vehicle having an assist function that assists walking of a user may comprise: a vehicle body; a wheel system to move the vehicle body; sensor that detects an operating force; a power driver that supplies power to the wheel system (e.g. that supplies power to a drive wheel of the wheel system) based on the operating force; a motion sensor that detects a movement of the vehicle body; and a controller that controls the power driver, wherein the controller may detect the operating force detected by the sensor or the movement of the vehicle body detected by the motion sensor while the assist function is activated, and deactivate the assist function when a periodic fluctuation associated with walking by the user is not verified in at least one of either the detected operating force or the movement of the vehicle body.

According to one or more embodiments, a manually propelled vehicle having an assist function that assists walking of a user may comprise a vehicle body, a wheel system for moving the vehicle body, sensor that detects an operating force, power driver that supplies assisting force to the wheel system based on the operating force, motion sensor that detects a movement of the vehicle body, controller that controls the power driver, grip where the user grips at the time of operation, and grip sensor for detecting when the user grips the grip; and while gripping of the grip is not detected by the grip sensor and movement of the vehicle body is not detected by the motion sensor, the controller activates the assist function when the operating force detected by the sensor is within a predetermined range.

According to one or more embodiments, a method for controlling a manually propelled vehicle comprising an assist function that assists walking of a user, a vehicle body and a wheel system for moving the vehicle body may comprise: detecting an operating force; supplying power to the wheel system (e.g. supplying power to a drive wheel of the wheel system) based on the operating force; detecting a movement of the vehicle body according to the detected operating force; controlling the power driver; and when the user operates the manually propelled vehicle while the assist function is deactivated, activating the assist function based on the detected movement of the vehicle body. The method may comprising detecting rotation of the wheel system (e.g. detecting rotation of a wheel of the wheel system), supplying power to the wheel system and activating the assist function when the detecting of the rotation detects that the wheel system has rotated (e.g. that a wheel of the wheel system has rotated) a predetermined amount from a stationary state of the manually propelled vehicle. The method may comprise detecting rotation of the wheel system and activating the assist function when the detecting of the rotation detects that a predetermined time has elapsed from a stationary state of the manually propelled vehicle. The method may comprise cutting off the power to the wheel system (e.g. cutting off the power to the drive wheel(s) of the wheel system) when the assist function is deactivated. The method may comprise detecting the operating force detected or the movement of the vehicle body while the assist function is activated, and deactivating the assist function when a periodic fluctuation associated with walking by the user is not verified in at least one of either the detected operating force or the movement of the vehicle body. The method may comprise: detecting when the user grips a grip to operate the manually propelled vehicle; and if neither gripping of the grip nor the movement of the vehicle body is detected, activating the assist function when the detected operating force is within a predetermined range. The method may comprise: detecting when the user grips a grip to operate the manually propelled vehicle; and if the gripping of the grip is not detected, deactivating the assist function when the movement of the vehicle body is detected repeatedly and continuously for a predetermined number of times.

### [Brief Description of the Drawings]

FIG. 1A is a front view of one example of a manually propelled vehicle according to one or more embodiments of the invention.
FIG. 1B is a back view of the manually propelled vehicle illustrated in FIG. 1A.
FIG. 1C is a side view of the manually propelled vehicle illustrated in FIG. 1A.
FIG. 1D is a bottom view of the manually propelled vehicle illustrated in FIG. 1A.
FIG. 2A is a schematic perspective view of a handle of the manually propelled vehicle illustrated in FIG. 1A.
FIG. 2B is a diagram illustrating a schematic disposition of the handle illustrated in FIG. 2A.
FIG. 3 is a block diagram of one example of a manually propelled vehicle according to one or more embodiments of the invention.
FIG. 4 is a block diagram of one example of a power assist device provided in the manually propelled vehicle illustrated in FIG. 3.
FIG. 5 is a schematic diagram illustrating one example of a configuration of a wheel system and a power driver of the manually propelled vehicle illustrated in FIG. 1A.
FIG. 6 is a flowchart showing a normal assist state of a manually propelled vehicle according to one or more embodiments of the invention.
FIG. 7 is a flowchart of an operation verification of a manually propelled vehicle according to one or more embodiments of the invention.
FIG. 8 is a flowchart of another example of an operation verification of a manually propelled vehicle according to one or more embodiments of the invention.
FIG. 9 is a flowchart of yet another example of an operation verification of a manually propelled vehicle according to one or more embodiments of the invention.
FIG. 10 is a graph showing output of a sensor of a manually propelled vehicle according to one or more embodiments of the invention.
FIG. 11A is a schematic diagram illustrating an example of inappropriate operation of a manually propelled vehicle by a user according to one or more embodiments of the invention.
FIG. 11B is a schematic diagram illustrating an example of a non-steady operation of a manually propelled vehicle by a user according to one or more embodiments of the invention.
FIG. 12 is a flowchart of yet another example of an operation verification of a manually propelled vehicle according to one or more embodiments of the invention.

### [Detailed Description of Embodiments]

Embodiments of the present invention will be described below with reference to drawings.

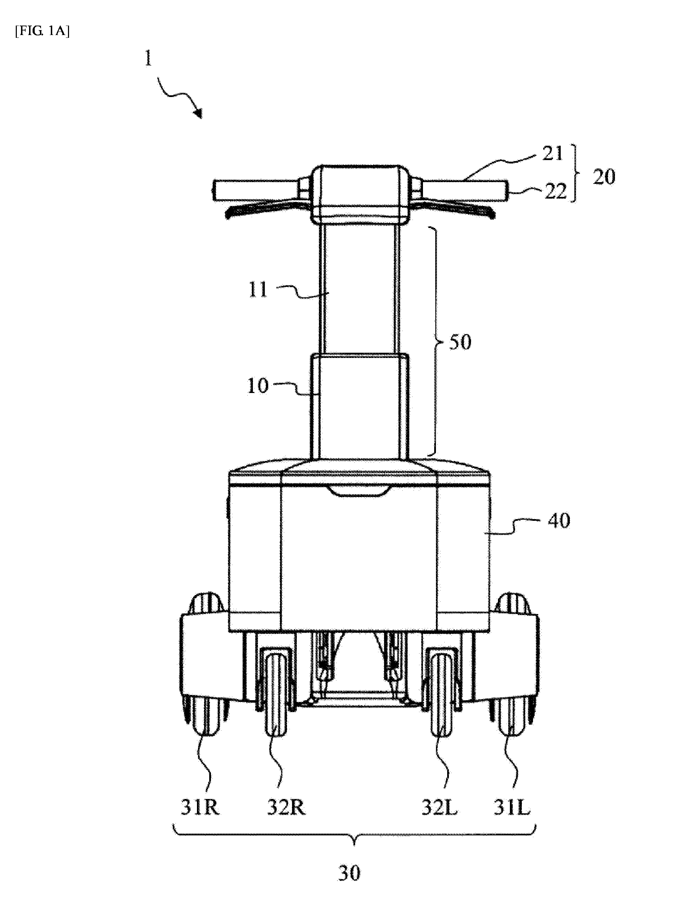

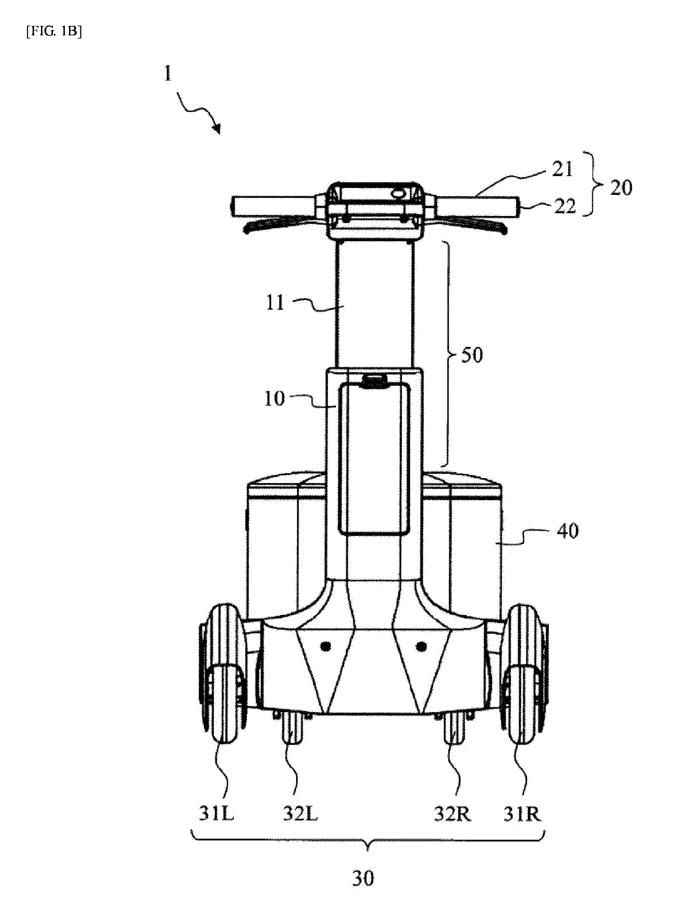

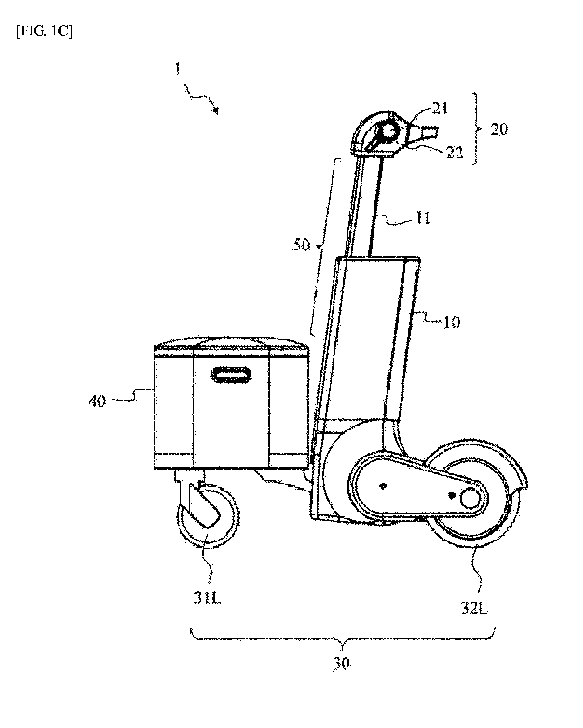

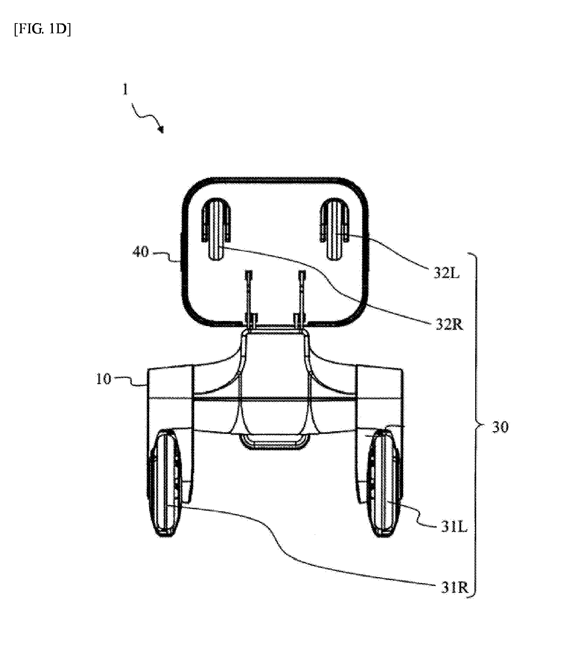

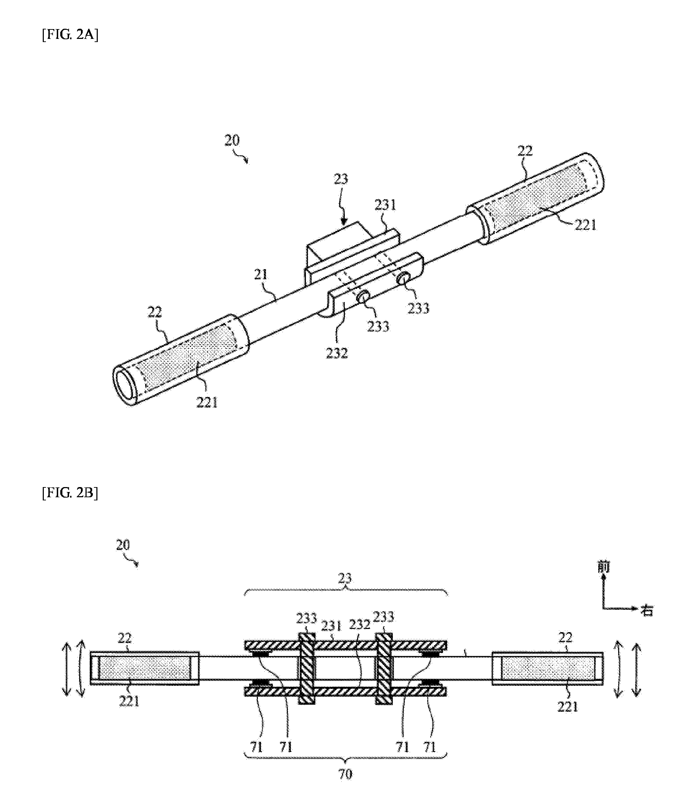

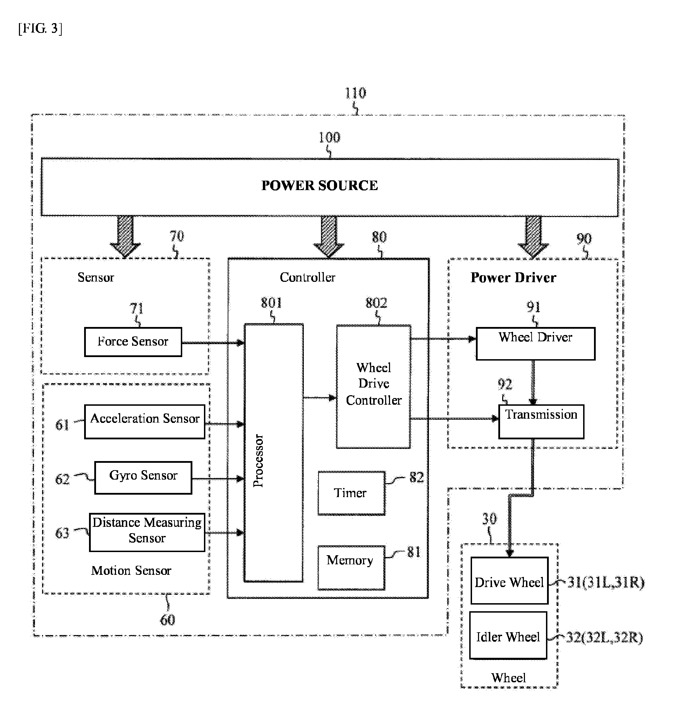

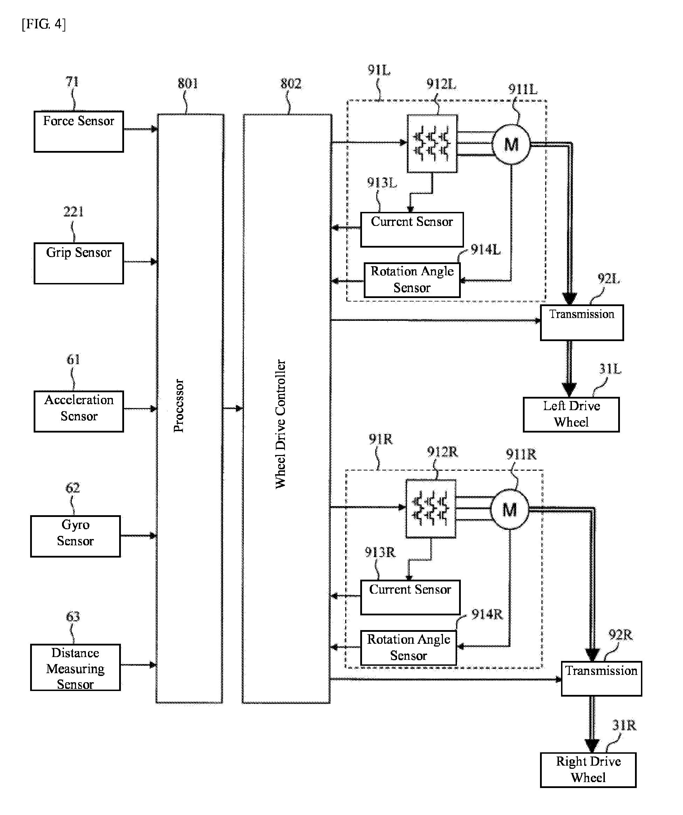

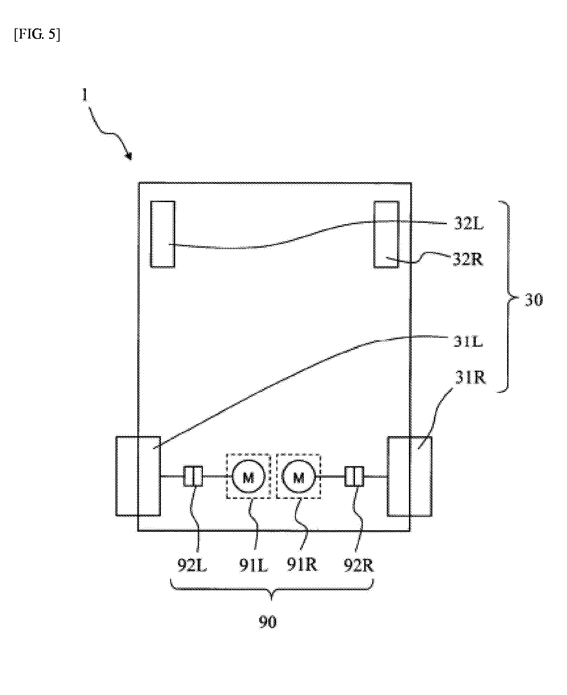

FIG. 1A is a front view of one example of a manually propelled vehicle according to one or more embodiments of the invention; FIG. 1B is a back view of the manually propelled vehicle illustrated in FIG. 1A; FIG. 1C is a side view of the manually propelled vehicle illustrated in FIG. 1A; and FIG. 1D is a bottom view of the manually propelled vehicle illustrated in FIG. 1A. Further, FIG. 2A is a schematic perspective view of a handle of the manually propelled vehicle illustrated in FIG. 1A; and FIG. 2B is a diagram illustrating a schematic disposition of the handle illustrated in FIG. 2A. Furthermore, FIG. 3 is a block diagram of one example of a manually propelled vehicle according to one or more embodiments of the invention, FIG. 4 is a block diagram of one example of an power assist device provided in the manually propelled vehicle illustrated in FIG. 3, and FIG. 5 is a schematic diagram of one example of a configuration of a wheel system and a power driver of the manually propelled vehicle illustrated in FIG. 1A. The arrow shown with a double line in FIG. 3 and FIG. 4 illustrates transmission of power.

FIG. 1 is a manually propelled vehicle 1 (e.g., ambulatory assist vehicle) according to one or more embodiments. The manually propelled vehicle 1 may be a so-called walker to assist walking of a user (e.g., elderly with weak lower body) and may also be used as a basket for carrying baggage and a seat for resting. As illustrated in the drawing of FIGS. 1A to 1D, FIG. 3, and FIG. 4, the manually propelled vehicle 1 may comprise a vehicle body 10, a handle 20, a wheel system 30, a baggage compartment part 40, a backrest 50, and a power assist device 110. Further, the power assist device 110 may comprise a motion sensor 60 (motion sensor or sensing circuit), sensor 70 (sensor or sensing circuit), a controller 80 (controller or control circuit), a power driver 90 (power driver or driving circuit), and a power source 100.

The vehicle body 10 may be a frame (framework) of the manually propelled vehicle 1 on which the configuration elements 20 to 100 listed above may be mounted. A metal material such as stainless steel, aluminum alloy, or the like, and a resin material such as FRP or the like may be used for the frame material forming the vehicle body 10.

As illustrated in FIGS. 2A and 2B, the handle 20 may be a member for gripping when the user is moving or traveling and is connected to a strut member 11 of the vehicle body 10. The handle 20 may comprise a rod-like handle bar 21, a grip 22 attached to the handle bar 21, and a handle holder 23 that supports the handle bar 21, and may be attached to the vehicle body 10. The user may hold the handle 20 to apply an operating force to the vehicle body 10, and the manually propelled vehicle 1 can be advanced, reversed, braked, and turned right and left by applying the operating force.

The handle holder 23 may be a U-shaped member where the upper part is open and has a front wall 231 and a rear wall 232. The center portion in the lengthwise direction of the handle bar 21 may be supported by a U-shaped recessed part of the handle holder 23, and a gap may be formed between the handle bar 21 and the front wall 231 and the rear wall 232. Further, a screw member 233 that passes through the rear wall 232 and is screwed into the front wall 231 may be attached to the handle holder 23. This screw member 233 may pass through a through hole formed in the handle bar 21, and the through hole may have an inner diameter larger than the outer form of the screw member 233. Further, a force sensor 71 of the sensor 70 may be attached in the gap between the handle bar 21 and the front wall 231 and the rear wall 232. The handle bar 21 may be disposed so as to rest by contacting the force sensor 71.

Supporting the handle bar 21 by the handle holder 23 in this manner allows the handle bar 21 to move within a predetermined range relative to the handle holder 23. The handle bar 21 may move in a front-back direction so as to eliminate the gap with the front wall 231 or the gap with the rear wall 232. At that time, the force sensor 71 attached on the handle holder 23 may be pressed to output an electric signal.

Further, because the inner diameter of the through hole provided in the handle bar 21 may be larger than the outer diameter of the screw member 233, the handle bar 21 can also move in the rotational direction for only that portion of the gap between the screw member 233 and the through hole. Movement at this time may also allow the handle bar 21 to push the force sensor 71 to output an electric signal from the force sensor 71.

As illustrated in FIGS. 2A and 2B, one force sensor 71 may be provided on both end parts in the lengthwise direction of the front wall 231 and the rear wall 232 for a total of four force sensors. From a combination of the electric signals outputted from these four force sensors 71, the operation of the handle bar 21 can be determined.

For example, when electric signals are outputted from two force sensors 71 of the front wall 231, the handle bar 21 is applied operating force in the forward direction by the user. Further, when electric signals are outputted from the force sensor 71 on the left side of the front wall 231 and the force sensor 71 on the right side of the rear wall 232, an operating force to turn the handle bar 21 in the right direction is applied by the user. The force sensor 71 is not limited to such a configuration, and various sensors can be disposed in various locations to determine the direction where the operating force of the handle bar 21 is applied.

The grip 22 may be attached on both end parts in the lengthwise direction of the handle bar 21. The grip sensor 221 may be embedded into the grip 22. The grip sensor 221 may detect if the user is gripping the grip 22 and may have a wide detection region in the lengthwise direction (axial direction of the handle bar 21) of the grip 22. This grip sensor 221 may detect if the grip 22 is gripped by a hand of the user, and may even distinguish whether an object contacting the grip 22 is a hand of the user, or hooked with an umbrella, a baggage, or the like. The determination method may be performed, for example, in the following manner.

When a hand of the user grips the grip 22, the contact area of the grip 22 with the hand of user may be wide. On the other hand, when hooking an umbrella, baggage or the like on the grip 22, the contact area of the grip 22 with the umbrella, baggage, or the like may be narrow. The size of the contact area may help determine whether the hand of the user is touched, or other article is hooked on the grip 22. Further, by increasing accuracy of the grip sensor 221, a size of the hand of the user gripping the grip 22 can be distinguished. A gender of the user, body figure, and the like may even be distinguished. For such grip sensor 221, for example, a well-known conventional sensor such as a pressure sensor applying a conductive rubber, a human sensory sensor of electrostatic capacitance type, or the like may be used.

The wheel system 30 may be attached to the bottom surface of the vehicle body 10, having at least one wheel to move the manually propelled vehicle 1 along the ground by rotating in accordance with walking of the user. The wheel system 30 may comprise at least one drive wheel. The wheel system 30 may comprise drive wheel(s) and idler wheel(s). As illustrated in FIG. 5, the wheel system 30 may be a four-wheel structure comprising drive wheels 31 (left drive wheel 31L and the right drive wheel 31R), and idler wheels 32 (left idler wheel 32L and the right idler wheel 32R). The drive wheels 31 may rotate around the axle attaching to the vehicle body 10, and may receive an operating force from the user and driving force (power or assisting force) from a power driver 90 to be rotated. The idler wheels 32 may be the wheels used for turning. As illustrated in FIG. 5, the left and right drive wheels 32L and 32R may be driven and controlled independently on the rotation speed and rotation direction respectively by wheel drivers 91L and 91R that correspond, respectively.

The baggage compartment 40 may be a box-shape member that can store personal belongings inside. A cushion member may be attached on the upper lid of the baggage compartment 40, and may function as a seating surface for the user to sit down on when seating. The baggage compartment 40 may be a detachable configuration relative to the vehicle body 10.

The backrest 50 may be a plate-like member for the user to lean back on when seating. In one or more embodiments of the manually propelled vehicle 1 illustrated in FIGS. 1A to 1D, the vehicle body 10 may be formed to be wider or the strut member 11 may be diverted as the backrest 50.

The motion sensor 60 may detect a state of the manually propelled vehicle 1, including an acceleration sensor 61, a gyro sensor 62, and a distance measuring sensor 63. The acceleration sensor 61 may detect the acceleration caused by the movement of the manually propelled vehicle 1. The acceleration sensor 61 may be used to detect acceleration, for example, in a direction along the axes of three orthogonal axes of front-back, left-right, and top-bottom.

The gyro sensor 62 may detect an inclination (angular velocity) of the manually propelled vehicle 1. The gyro sensor 62 may include a sensor that detects an angular velocity around three axes of the front-back, left-right, and top-bottom. The motion sensor 60 according to one or more embodiments of the present example may adopt a six-axis motion sensor that combines the acceleration sensor 61 and the gyro sensor 62 on a single chip. Further, the motion sensor 60 may be provided on the handle 20 near the user in the manually propelled vehicle 1; however, the motion sensor 60 may be provided elsewhere, such as on the vehicle body 10.

The distance measuring sensor 63 may measure between the manually propelled vehicle 1 and the user, and detect a walking state of the user by measuring the distance between the manually propelled vehicle 1 and the user. By providing the distance measuring sensor 63 and measuring the distance between the manually propelled vehicle 1 and the user, a positional relationship of the manually propelled vehicle 1 and the user may be detected. A sensor (e.g. an infrared sensor) that only verifies the presence of a user may be used instead of the distance measuring sensor 63.

The sensor 70 may detect an operating force applied to the manually propelled vehicle 1 from the user and may comprise a force sensor 71. The force sensor 71 may detect the operating force from the user applied to the handlebar 21, and a pressure sensor where a conductive rubber is applied may be used here. The force sensor 71 as illustrated in FIG. 2B is attached between the handlebar 21 and the handle holder 23. The force sensor 71 may detect the operating force from the user applied to the handlebar 21.

In the manually propelled vehicle 1, the handlebar 21 may be supported so as to allow a displacement within a predetermined range with respect to the handle holder 23. Further, the force sensor 71 may be disposed between the handlebar 21 and the handle holder 23, and when the handlebar 21 is displaced with respect to the handle holder 23, the handlebar 21 may press the force sensor 71 to detect the pressure. Based on this pressure, the operating force applied to the handle bar 21 may be detected.

The configuration in one or more embodiments of the present example may be arranged such that the force sensor 71 is disposed between the handlebar 21 and the handle holder 23; however, other configurations are possible. For example, the force sensor 71 may be embedded into the grip 22 same as the grip sensor 221. In this case, the grip sensor 221 and the force sensor 71 may be used in common with one sensor.

Further, in the manually propelled vehicle 1 of one or more embodiments of the present example, the pressure sensor that detects the operation input as pressure from a hand of the user may be used; however, other configurations are possible. For example, a sensor that detects the handlebar 21 when an operating force is inputted, or that detects an amount of deflection of the supporting member 11, may be attached. For such sensor, for example, a strain gauge, a pressure sensor, or the like may be used.

The controller 80 may comprise a motion sensor 60, a sensor 70, and a power driver 90, in other words, a logic circuit (circuit a MPU, CPU, or the like) that controls the power assist device 110 comprehensively. The controller 80 may comprise a processor 801 as a function block that sets various parameters (drive target values such as the rotation direction, rotation speed, rotation torque, and the like) to drive motors 911L and 911R of the power driver 90, and a wheel drive controller 802 that outputs a control signal. The processor 801 and the wheel drive controller 802 are described as an independent block in the controller 80 in FIG. 3 and FIG. 4; however, they may be a part of the same circuit that configures the controller 80 or a program, and they are not limited to being completely independent.

The processor 801 may determine drive target values of the left and right drive wheels 31L and 31R based on an input signal from, for example, the motion sensor 60 and the sensor 70. Further, the wheel drive controller 802 may send a control signal that controls respectively and independently the rotation direction and rotation speed of the left and right drive wheels 31L and 31R according to the drive target value from the processor 801 to the corresponding wheel drivers 91L and 91R.

Furthermore, the controller 80 may comprise a memory 81 to store various information and a timer 82 to acquire time. The memory 81 may comprise read only ROM, a readable and writable RAM, and the like. The timer 82 may be a commonly known timekeeping means to detect time. Details of operation of the controller 80 will be described later.

The power driver 90 may assist an operation of the user according to the control signal from the controller 80, including a wheel driver 91 that outputs driving force to the manually propelled vehicle 1 (the left drive wheel 31L and right drive wheel 31R). As illustrated in FIG. 4, the wheel drivers 91L and 91R may be provided separately to drive and control the left and right drive wheels 31L and 31R respectively and independently.

A power source 100 may supply power to the motion sensor 60, sensor 70, controller 80, and power driver 90. A secondary battery (such as a nickel-hydrogen battery and lithium-ion battery) attaching to the vehicle body 10 in removable manner may be used for the power source 100.

Next, the power driver 90 will be described in detail. As illustrated in FIG. 4, the power driver 90 may comprise the wheel drivers 911 and 91R. The wheel drivers 91R and 91L may comprise motors 911L and 911R, motor drivers 912L and 912R, current sensors 913L and 913R, and rotation angle sensors 914L and 914R, respectively.

Each of the motors 911L and 911R may rotate and drive the left and right drive wheels 31L and 31R, independently. Each of the motor drives 912L and 912R may be an inverter circuit for generating a drive current of the motors 911L and 911R according to a control signal from the controller 80, respectively. Each of the current sensors 913L and 913R may be a sensor that detects the driving current that flows the motors 911L and 911R, respectively. The current sensors 913L and 913R may include, for example, a shunt resistor or a magnetic sensor. Each of the rotation angle sensors 914L and 914R may detect respectively a rotation angle of the motors 911L and 911R. The rotation angle sensors 914L and 914R may include, for example, an optical rotary encoder or a hall element.

The wheel drive controller 802 may acquire each output value from the current sensors 913L and 913R and the rotation angle sensors 914L and 914R. The wheel drive controller 802 may generate a driving signal based on the drive target value from the processor 801 to the motor drivers 912L and 912R. Further, the wheel drive controller 82 may perform a feedback control of the motor drivers 912L and 912R to match the rotation direction and rotation speed of the motors 911Land 911R the target value according to each output value of the current sensors 913L, 913R and the rotation angle sensors 914L, 914R.

Furthermore, the driver 90 may comprise transmissions 92L and 92R to transfer the driving force of the motors 911L and 911R to the left and right drive wheels 31L and 31R, respectively. Each of the driving forces of the motors 911L and 911R may be transferred to the left and right drive wheels 31L and 31R via a power shaft, and the transmissions 92L and 92R may be attached to the power shaft. The transmissions 92L and 92R may connect or release the power shaft by following the instructions of the wheel drive controller 802. When the transmissions 92L and 92R release the power shaft, the driving forces from the motors 911L and 911R are prevented from transferring to the left and right drive wheels 31L and 31 R, respectively.

Such transmissions 92L and 92R may comprise a transmission mechanism provided with a friction clutch. By using the friction clutch, the power shaft can be connected with less impact even when the motors 911L and 911R are rotating. Alternatively, a mechanism that can switch between transmitting the power and cutting off the power may be used. Further, a speed reducer that can reduce speed of the rotation speed of the motors 911L and 911R, increase the torque, and also transfer to the left and right drive wheels 31L and 31R may be attached integrally.

By using such transmissions 92L and 92R, the left and right drive wheels 31L and 31R can be rotated in a state where the load by the motors 911L and 911R is not employed when the motors 911L and 911R are not operated, for example, by releasing the transmissions 92L and 92R.

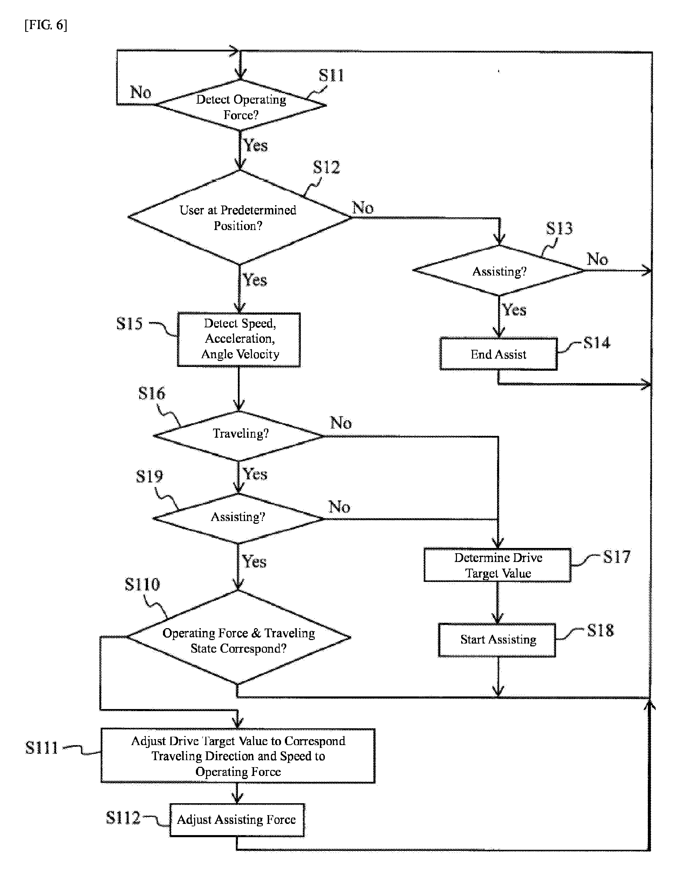

Next, a description of operation of the manually propelled vehicle 1 will be given with reference to drawings. FIG. 6 is a flowchart showing a normal assisting state of a manually propelled vehicle according to one or more embodiments. For example, the manually propelled vehicle 1 can safely assist an operation of the manually propelled vehicle 1 by a user by giving an appropriate assisting force to an operating force by the user. Therefore, the processor 801 of the manually propelled vehicle 1 may detect the operating force based on output from the force sensor 71.

The controller 80 of the manually propelled vehicle 1 may acquire output of the force sensor 71, and detect whether or not there is an operating force input from the user to a handle 20 based on the output (step S11). When there is no operating force input (NO in step S11), the controller 80 may wait until it detects the operating force input.

When the operating force from the user is detected (YES in step S11), the controller 80 may determine that the force is applied to the handle 20, and may determine if the user is trying to operate the manually propelled vehicle 1. In other words, the controller 80 may determine whether or not there is a user at a predetermined position behind the manually propelled vehicle 1 based on the output from a distance measuring sensor 63 (step S12). For example, when the user is seated on the seating surface of the manually propelled vehicle 1 and operating the handle 20, the controller 80 can determine that the user is not using the manually propelled vehicle 1 in a standard use method although an operating force is inputted. Further, there is a case that the force other than the operating force by the user is employed to the handle 20, and assistance can be controlled when it is not used in the standard use method.

When the user is not at the predetermined position behind the manually propelled vehicle 1 (NO in step S12), the controller 80 may verify whether or not the assisting is being carried out (step S13). When the assisting is not carried out (NO in step S 13), the controller 80 may return to the detection of the operating force (step S11). When the assisting is carried out (YES in step S13), the controller 80 may stop assisting (supplying the assisting force) (step S 14) and return to the detection of the operating force (step S11).

Further, when the user is at the predetermined position behind the manually propelled vehicle 1 while detecting the operating force (YES in step S12), the controller 80 may acquire an acceleration and angular velocity from the output from an acceleration sensor 61 and a gyro sensor 61 (step S15). The controller 80 may acquire rotation angles of the left and right drive wheels 31L and 31R from rotation angle sensors 914L and 914R, and may determine whether or not the manually propelled vehicle 1 is traveling (step S16).

When the manually propelled vehicle 1 is not traveling (NO in step S16), the controller 80 may determine that the operating force is applied from the user to manually propelled vehicle 1 in a stationary state. Further, the processor 801 may determine a drive target value including the rotation direction, rotation speed, and rotation torque of the motors 911L and 911R and delivers to a wheel drive controller 802 (step S17). The wheel drive controller 802 may generate a control signal based on the drive target value and send to the motor drivers 912L and 912R. The motor drivers 912L and 912R may supply driving currents to the left and right drive wheels 31L and 31R based on the control signal respectively to start assisting (step S18). Even after starting the assist (after step S18), there may be cases where the operating force fluctuates, and therefore, the process returns to the detection of the operating force (step S11).

Meanwhile, when the manually propelled vehicle 1 is traveling (YES in step S16), the controller 80 may verify whether the manually propelled vehicle is assisting the operation of the user (step S 19). When the manually propelled vehicle is not assisting (NO in step S 19), the process advances to step S 17 and step S18, to determine the drive target value and start assisting. The determination of the drive target value and initiation of the assist may be the same as described above.

When the manually propelled vehicle 1 is assisting the operation of the user (YES in step S19), the processor 801 may adjust the drive target value so that the acceleration, angular velocity, speed, and traveling direction of the manually propelled vehicle 1 correspond to the operating force (step S111). Further, the drive wheel controller 802 may generate a drive signal based on the adjusted drive target value, and performs adjustment of the assisting force of the motors 911L and 911R (step S112).

By operating as described above, the manually propelled vehicle 1 according to one or more embodiments can provide safe assistance for the operation by the user. Further, the manually propelled vehicle 1 may monitor the rotation angle of the motors 911L and 911R and also monitor current supply. Therefore, the manually propelled vehicle 1 can verify if the proper current is supplied and the motor 911L and 911R are securely operated so that more safe and secure assistance can be provided.

### (First example)

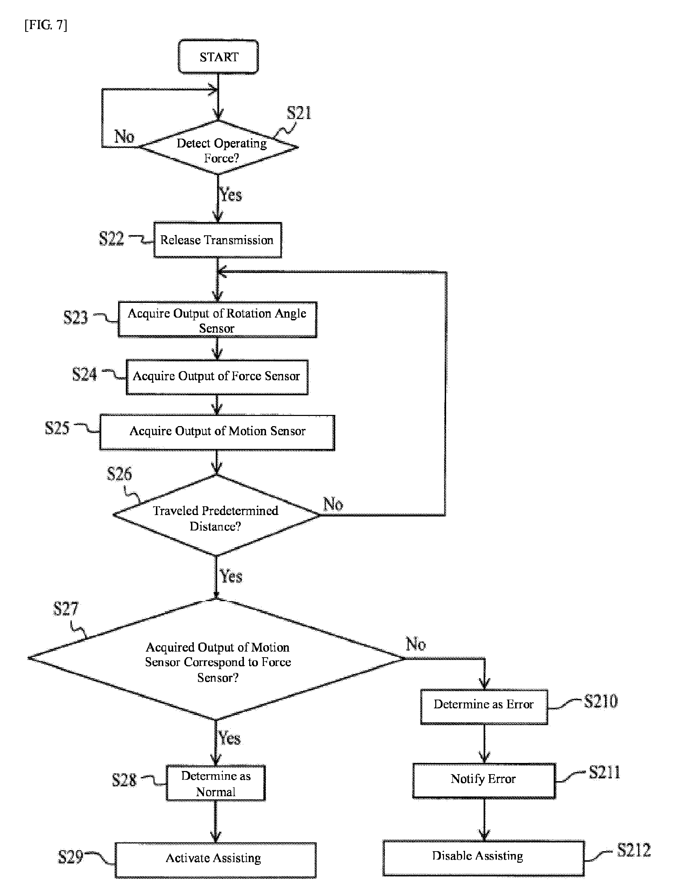

One or more embodiments of the operation verification procedure of a manually propelled vehicle according to a first example of the present invention will be described with reference to drawings. FIG. 7 is a flowchart of the operation verification of the manually propelled vehicle according to one or more embodiments of the present invention. In the manually propelled vehicle 1, sensors including the motion sensor 60 and the sensor 70 operate accurately to assist the operation by the user safely and securely. Accordingly, in the manually propelled vehicle 1 according to one or more embodiments of the present example, when the user starts pushing the stationary manually propelled vehicle 1, the operation verification of each sensor may be performed. A procedure for performing the operation verification of the sensor will be described below with reference to drawings. Each part of the manually propelled vehicle 1 may be as described above.

In the manually propelled vehicle 1, when the transmissions 92L and 92R are released, the connection of the left and right drive wheels 31L and 31R with the motors 911L and 911R may be disconnected. When the left and right drive wheels 31L and 31 R rotate in this state, the motors 922L and 922R may not load. That is, when the transmissions 92L and 92R are released, the left and right drive wheels 31L and 31R may be axially supported rotatably similar to the idler wheels 32L and 32R. At that time, when the operating force is applied from the user, the manually propelled vehicle 1 may move in the direction at the acceleration, angular velocity, and speed corresponding to the operating force. The manually propelled vehicle 1 according to one or more embodiments of the present example may use these types of characteristics to determine whether the sensors are running properly.

First, the controller 80 may determine whether or not the operating force is employed to a handle 20 based on the output of a sensor 70 (step S21). When the operating force is not detected (step S21), the process waits until the operating force is detected. When the operating force is detected (YES in step S21), a wheel drive controller 802 may send an operation signal to release the transmissions 92L and 92R (step S22). Then, the wheel drive controller 802 may acquire outputs of the rotation angle sensor 914L and 914R (step S23). Further, the controller 80 may simultaneously acquire an output of the sensor 70 (step S24). Furthermore, the controller 80 may simultaneously acquire an output of a motion sensor 60 and outputs of an acceleration sensor 61 and a gyro sensor 62 (step S25).

The wheel drive controller 802 may verify whether the manually propelled vehicle 1 has traveled a specific distance after the connecting parts 92L and 92R are released (step S26). The movement of the manually propelled vehicle 1 may be determined based on the output of rotation angle sensors 914L and 914R to detect the rotation angle of the left and right drive wheels 31L and 31R, and by the rotation angle and the outer periphery length of the left and right drive wheels 31L and 31R. The specific distance, for example, may be a distance where the left and right drive wheels 31L and 31R are rotated about 1/3 round. When the manually propelled vehicle 1 has not been moved the specific distance (NO in step S26), the process returns to acquire the output of the rotation angle sensors 914L and 914R (step S23).

When the manually propelled vehicle 1 has been moved by the specific distance (YES in step S26), the process determines whether the output of the sensor 70 and the output of the motion sensor 60 correspond (step S27). When the drive shaft is released by the transmissions 92L and 92R, the manually propelled vehicle 1 may be moved by the operating force from the user. A processor 802 may compare a theoretical value of a variety of parameters (acceleration, angle velocity, direction, speed, and the like) when the operating force is applied to the manually propelled vehicle 1, to an actual measured value that has been actually measured by each sensor of the motion sensor 60 to determine that the difference is within an acceptable range.

When the output of the sensor 70 and the output of the motion sensor 60 correspond (YES in step S27), the controller 80 may determine that each sensor of the motion sensor 60 and the sensor 70 are operating normally (step S28). Then, the wheel drive controller 802 may connect the transmissions 92L and 92R to activate the assist function (step S29).

Meanwhile, when the output of the sensor 70 and the output of the motion sensor 60 do not correspond (NO in step S27), the controller 80 may determine that there is a failure (has an error) in the motion sensor 60 and (or) in the sensor 70 (step S210). Indication of the failure here may be considered a failure of the motion sensor 60 or the sensor 70, damage or failure of the wheel system 30 of the manually propelled vehicle 1, an inability of the manually propelled vehicle 1 itself to move (such as being caught on something or the like), and the like. That is, any case in which the manually propelled vehicle 1 is not moving correctly relative to the operating force applied may be included.

Further, the controller 80 may notify the failure (error) by using a notification device (e.g., a device that outputs an image, lighting of a lamp, sound, or the like) omitted in the illustration (step S211). Further, the controller 80 may continue the released state of the transmissions 92L and 92R to deactivate the assist function (step S212). Switching the assist function to be deactivated while the user is operating the manually propelled vehicle 1 using the assist function may not be safe because the user may become accustomed to an abnormal operation sensation, or it may make the user use unreasonable operating force, at the moment of switching when disabling. Therefore, when disabling the assist function from the state in which the assist function is used, the assisting force (assisting amount) may be reduced gradually.

When a braking device (brake) is provided to the left and right drive wheels 31L and 31 R, the assist function may be deactivated by activating the braking device to fix the manually propelled vehicle 1 so as to not move. Rendering the manually propelled vehicle 1 to be immovable can prevent the user from using the manually propelled vehicle 1 that is not able to provide a normal assistance.

The operation verification may be performed by acquiring outputs of each sensor (the acceleration sensor 61, gyro sensor 62, and force sensor 71) when the manually propelled vehicle 1 travels for the specific distance; however, this operation may be verified based on the traveling time rather than the traveling distance. For example, from immediately after traveling begins, time may be measured by a timer 82, the outputs from each sensor are acquired until a predetermined time has elapsed, and the operation verification may be performed based on the outputs.

Alternatively, both the traveling distance and traveling time may be used. For example, the output from each sensor may be acquired until either one or both can be achieved where the specific distance is traveled or/and the predetermined time has elapsed. By using traveling distance and traveling time together, a failure in the rotation angle sensors 914L and 914R can also be detected. That is, when the controller 80 cannot detect that the left and right drive wheels 31L and 31R have traveled for the specific distance after the predetermined time has elapsed, the controller 80 can determine that there is an abnormality in the rotation angle sensors 914L and 914R. For example, there may be a case where the manually propelled vehicle 1 is pushed uphill. In that case, it may be difficult to travel for the specific distance at the predetermined time. Therefore, the condition (inclination and the like) of the manually propelled vehicle 1 from the output of the motion sensor 60 may be detected to change the time until the distance is detected.

The manually propelled vehicle 1 of one or more embodiments of the present example may be configured to perform operation verification at the time of initiating travel. Therefore, even when a failure (error) is found, the burden on the user can be reduced because the traveling distance, speed, and the like of the manually propelled vehicle 1 are small. Also, the user can be prevented from operating the manually propelled vehicle 1 without knowing that there is a failure, so the safety of the user can be ensured. Furthermore, when the user uses the manually propelled vehicle 1 with the knowledge that the assist function is not operating, the user may load baggage to the extent that the user can operate without the assistance, may use the manually propelled vehicle 1 in order to move to a location. Therefore, the burden on the user may be reduced.

### (Second Example)

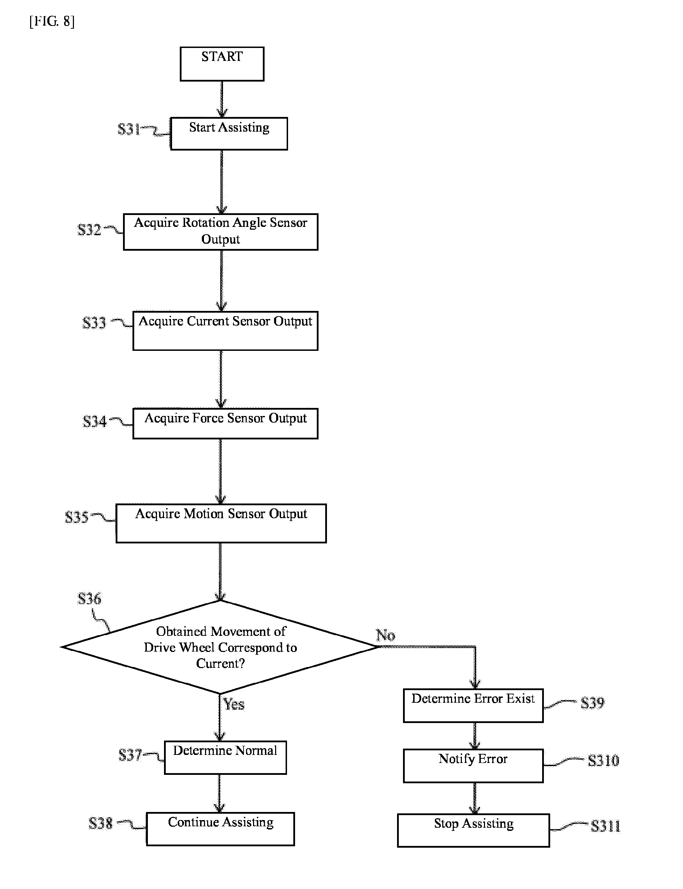

Another example of the operation verification procedure of a manually propelled vehicle according to one or more embodiments of the present invention will be described with reference to drawings. FIG. 8 is a flowchart of another example of an operation verification of a manually propelled vehicle according to one or more embodiments of the present invention. Each part of the manually propelled vehicle 1 may be as described above. As described above, the manually propelled vehicle 1 may perform operation verification on a motion sensor 60 and the sensor 70 at the time of initiating travel, and when the controller determines that there is no error, the manually propelled vehicle 1 may start assisting the operation by the user as needed (step S31).

When the manually propelled vehicle 1 starts the assist by the power assist device 110, a drive signal may be sent to wheel drivers 92L and 91R from a wheel drive controller 802. Then, the drive signal may be inputted to motor drivers 912L and 912R, and the motor drivers 912L and 912R may supply a driving current to motors 911L and 911R according to the drive signal. At that time, current sensors 913L and 913R provided in the wheel drivers 91L and 91R may detect a current value and send to the wheel drive controller 802 (step S32).

Further, the controller 80 (the wheel drive controller 802) may acquire an output of rotation angle sensors 914L and 914R (step S33). The controller 80 may acquire an output of a sensor 70 (step S34) and acquire an output of a motion sensor 60 (step S35).

The controller 80 may calculate a travel amount of the left and right drive wheels 31L and 31R from an output of rotation angle sensors 914L and 914R, and may determine whether or not the travel amount corresponds to the drive current value (step S36). For example, when the manually propelled vehicle 1 is on an uphill, or in some sort of failure, there may be a case that the travel amount is small even though the drive current value is large. Therefore, the controller 80 may estimate a condition (inclination, road surface condition, and the like) of the manually propelled vehicle 1 from the output of the motion sensor 60 and output of the sensor 70 and compare the travel amount and the drive current value by considering the results.

When the travel amount of the left and right drive wheels 31L and 31R and the drive current value of the motors 911L and 911R correspond (YES in step S36), the controller 80 may determine that the wheel drivers 91L and 91R are running normally (step S37). Further, the controller 80 may continue the assist provided by the power assist device 110.

When the travel amount of the left and right drive wheels 31L and 31R and the drive current value of the motors 911L and 911R do not correspond (NO in step S36), the controller 80 may determine that there is a failure in the wheel drivers 91L and 91R (step S39). Further, the controller 80 may notify that there is a failure in the wheel drivers 91L and 91R (step S310) and deactivate the assist function (step S310).

In the flowchart of the operation verification described above, the wheel drivers 91L and 91R are not particularly differentiated; however, when there is a failure on either side, the controller 80 may notify that the wheel driver has a failure. At that time, a failure of the current sensor may be detected by presence or absence of the output from the current sensor, and a failure of the rotation angle sensor may be detected by presence or absence of the output from the rotation angle sensor. Furthermore, after checking a failure in each sensor, the controller 80 may detect a comprehensive failure of the wheel driver by comparing the output of the current sensor and the output of the rotation angle sensor. Also such operation verification of the wheel driver may be constantly performed while the manually propelled vehicle 1 is operated, or may be performed at a regular cycle.

Accordingly, the user can be prevented from using the manually propelled vehicle 1 that is unable to assist due to the failure of the wheel drivers 91L and 91R. Thereby, the user can be prevented from being pulled by the manually propelled vehicle 1 due to excessive assist, becoming difficult to operate due to insufficient assist, or the operability from worsening due to a failure in only one side of the wheel driver 91L or 91R.

### (Third Example)

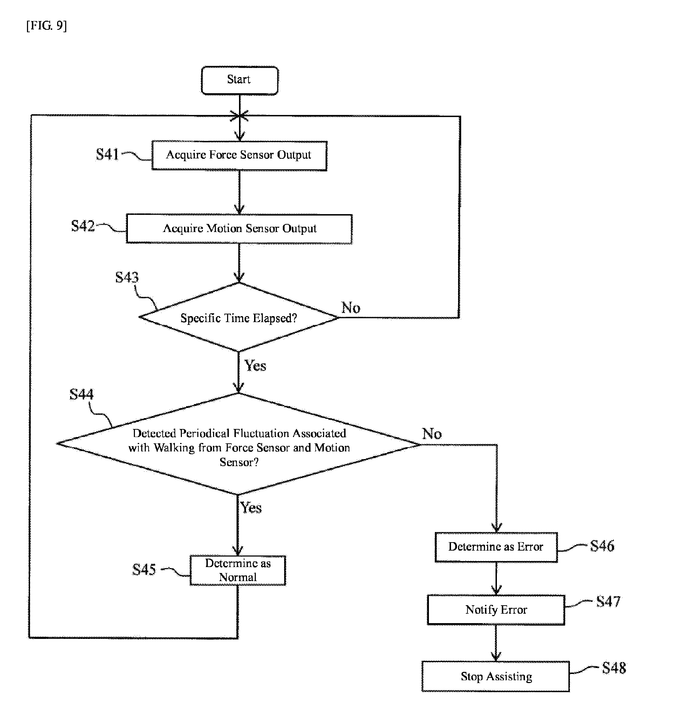

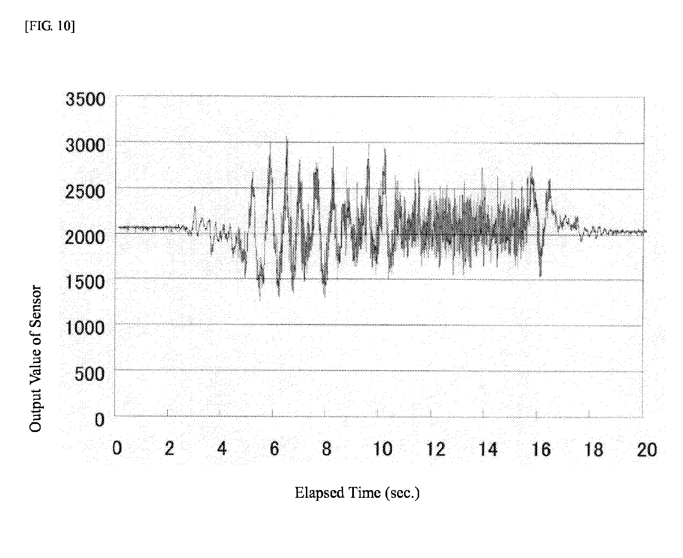

Yet another example of the operation verification procedure of a manually propelled vehicle according to one or more embodiments of the present invention will be described with reference to drawings. FIG. 9 is a flowchart of yet another example of operation verification of a manually propelled vehicle according to one or more embodiments of the present invention. FIG. 10 is a graph showing an output of a sensor of a manually propelled vehicle according to one or more embodiments. Each part of the manually propelled vehicle 1 may be as described above. In one or more embodiments of the first example and one or more embodiments of the second example, the operation verification may be performed at the time of start traveling of the manually propelled vehicle 1. However, there may be a case in which a failure occurs while the manually propelled vehicle 1 is traveling. Therefore, in the manually propelled vehicle 1 according to one or more embodiments of the present example, the operation verifications of a motion sensor 60 and a sensor 70 may be performed while traveling. Further, the vertical axis of the graph in FIG. 10 is a voltage of an output signal of a force sensor 71 of the sensor 70, and the horizontal axis is a time from the start of detection.

Before illustrating the operation verification procedure of the motion sensor 60 and the sensor 70, a periodic speed change in human (user) walk will be described. When a human (user) walks, even when recognizing that walking has been at a constant speed, a periodic fluctuation in walking speed occurs viewed in a short period of time. In other words, the walking speed of a human may fluctuate due to a certain walking rhythm (behavior of the user). Further, when the user operates the manually propelled vehicle 1 while walking, components that periodically fluctuate caused by the walking rhythm are included even in the operating force when the user operates (pushes) the manually propelled vehicle 1. For example, in the graph of FIG. 10, the output of the sensor 70 is affected by the component that fluctuates periodically caused by the walking rhythm, and a certain periodic fluctuation is recognized.

The controller 80 may use this periodic fluctuation when the operating force is applied to the manually propelled vehicle 1 to perform the operation verification of each part. First, the controller 80 may acquire an output of a sensor 70 (step 41), and acquire an output of a motion sensor 60 (mainly an acceleration sensor 61) (step S42). The controller 80 may store the acquired information into a memory 81 in association with the time. The controller 80 may determine whether a predetermined time has elapsed from the acquisition of the sensor 70 and the acquisition of the output of the acceleration sensor 61 (step S43).

When the predetermined time has not elapsed (NO in step S43), the controller 80 may return to acquiring the output of the sensor 70 (step S41). When the predetermined time has elapsed (YES in step S43), the controller 80 may refer to the data where the outputs of the sensor 70 and outputs of the acceleration sensor 61 to determine whether there is a periodic behavior associated with walking in the data (step S44). As a verification method for periodic behavior associated with walking, for example, repetition of the maximum value and minimum value of the outputs within a predetermined range of the output value may be identified. In addition, a determination may be performed whether a periodic behavior associated with walking by storing a portion of the acquired data previously into the memory 81 as sample data to compare with the sample data.

When there is behavior associated with walking in the stored data (YES in step S44), the controller 80 may determine that the power assist device 110 of the manually propelled vehicle 1 is running normally (step S45). Then, the controller 80 may newly acquire an output of the sensor 70 (return to step S41).

When there is no behavior associated with walking in the stored data (NO in step S44), the controller 80 may determine that there is a failure in the power assist device 110 of the manually propelled vehicle 1, the user is operating the manually propelled vehicle 1 inappropriately or is giving unsteady operation (step S46). Then, the controller 80 may notify an error (step S47) and deactivate the assist function (step S48).

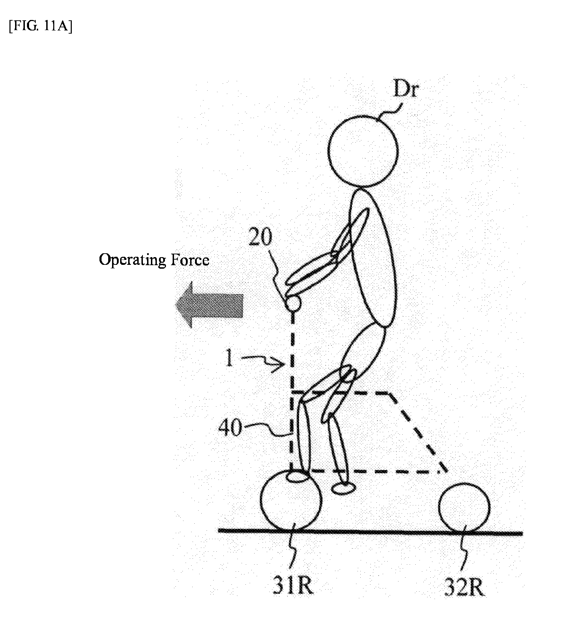

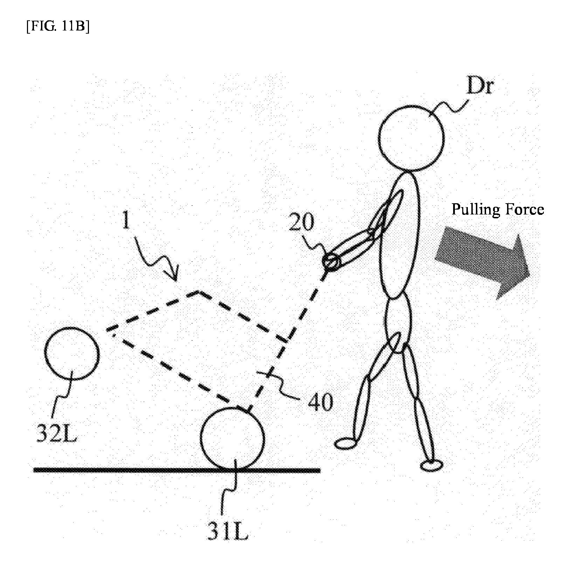

In addition, a description of an inappropriate operation and unsteady operation by a user is described with reference to drawings. FIG. 11A is a schematic diagram illustrating an example of inappropriate operation of a manually propelled vehicle by a user; and FIG. 11B is a schematic diagram illustrating an example of an unsteady operation of a manually propelled vehicle by a user. FIG. 11 is one example of inappropriate operation illustrating when a user Dr is riding on the seating surface of the manually propelled vehicle 1 and operating a grip 22 of a handle 20. Because the user Dr applies an operating force onto the handle 20, the controller 80 may acquire an output of the operating force from the sensor 70.

Therefore, the controller 80 may start assisting; however, because no periodic behavior has occurred associated with walking in the operating force from the user Dr who is riding on the seating surface in this manner, the controller 80 may determine an error and stop assisting. The manually propelled vehicle 1 may determine whether or not the user Dr is present by a distance measuring sensor 63, and detect that the user Dr is not behind the manually propelled vehicle 1 in the normal state. Therefore, in the normal state, assisting may not be performed in this type of operation. However, when the distance measuring sensor 63 has a failure, or when a different person is walking behind the manually propelled vehicle 1, or the like, even though the output of the distance measuring sensor 63 is an output of when assisting is possible, the controller 80 can determine an error because there is no periodic behavior associated with walking in the output of the sensor 70. The safety can be verified by the distance measuring sensor 63 and the operation verification of one or more embodiments of the present example.

Further, as illustrated in FIG. 11B, when the user Dr pushes the handle 20 from the rear side of the manually propelled vehicle 1, there may be a case in which the front side is lifted. In such case, the output of the sensor 70 may become an output indicating that the operating force of the user Dr is applied to the handle 20. At that time, the controller 80 may perform assisting; however, when the front side travels so as to be raised as is, a periodic behavior associated with walking does not appear in the output of the motion sensor 60. Therefore, the controller 80 may determine that it is an error and not assist.

As described above, a periodic behavior associated with walking by the user can be verified in the output of the sensor 70 and the output of the motion sensor 60, and therefore, even during travel of the manually propelled vehicle 1, the operation verification of the sensor 70 and the motion sensor 60 can be performed. Further, even though abnormality in various sensors is not determined, the user can be assisted safely because the operation by the user can be determined either as normal or as having an error.

Behavior of both outputs of the sensor 70 and output of the motion sensor 60 may be verified as a method to verify periodic behavior associated with walking in one or more embodiments of the present example; however, the invention is not limited to such a configuration. A periodic behavior associated with walking may also appear in outputs of the rotation angle sensors 914L and 914R, and therefore, the outputs of the rotation angle sensors 914L and 914R may be used. Furthermore, outputs of all of these may be used, or output of at least one of them may be used.

Characteristics other than these are the same as the characteristics of one or more embodiments of the first example and one or more embodiments of the second example.

### (Fourth Embodiment)

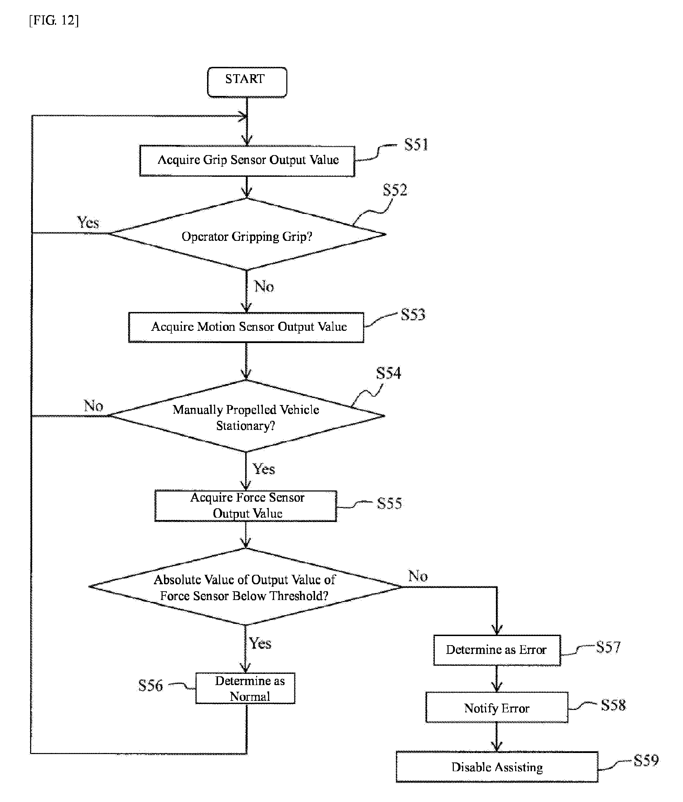

A manually propelled vehicle (manually propelled vehicle 1) according to one or more embodiments of the present invention may determine an assisting force to assist operation by the user based on output of a motion sensor 60 and output of a sensor 70. The outputs thereof correspond to each sensor. Therefore, the manually propelled vehicle 1 in one or more embodiments of the present example may perform operation verification in a stationary state. FIG. 12 is a flowchart of yet another example of operation verification of a manually propelled vehicle according to one or more embodiments of the present invention.

As illustrated in FIG. 12, a controller 80 may acquire output of a grip sensor 221 (step S51). The controller 80 may determine whether a user is gripping a grip 22 from the output of the grip sensor 221 (step S52). There may be cases where a personal belonging or umbrella may be hooked on the handle 20 other than a hand of the user. The grip sensor 221, as described above, can detect a width of the contact portion, and the controller 80 may determine whether or not an object in contact with the grip 22 is a hand of the user based on the information of the width.

When the controller 80 determines that a hand of the user is contacting the grip 22 (YES in step S52), the controller 80 may resume acquiring the output of the grip sensor 221 (return to step S51). When the controller 80 determines that a hand of the user is not contacting the grip 22 (NO in step S52), the controller 80 may acquire the output of the motion sensor 60 (step S53). The controller 80 may determine whether the manually propelled vehicle 1 is stationary from the output of the motion sensor 60 (step S54).

When the controller 80 determines that the manually propelled vehicle 1 is not stationary (NO in step S54), the controller may resume acquiring the output of the grip sensor 221 (return to step S51). When the controller 80 determines that the manually propelled vehicle 1 is stationary (YES in step S54), the controller 80 may acquire the output of the sensor 70 (step S55).

When an operating force is applied from the user, the assisting force may be applied to the manually propelled vehicle 1 from the power assist device 110. Consequently, when the manually propelled vehicle 1 is stationary, the operating force may not be applied to the handle 20 from the user. The controller 80 may use this fact and determine whether the operating force is input. When the operating force is not applied to the handle, the theoretical value of output of the sensor 70 may be "0"; however, in one or more embodiments, the output rarely becomes absolute "0" in an actual sensor, and a small output value within a predetermined range is constantly outputted. Accordingly, the controller 80 of the manually propelled vehicle 1 according to one or more embodiments of the present example may be designed so that the operating force is not applied to the handle 20 as long as an absolute value of the output value of the sensor 70 does not exceed the threshold.

That is, the controller 80 may determine whether the absolute value of the output value of the sensor 70 is not more than the threshold (step S56). When the absolute value of the output value of the sensor 70 is below the threshold (YES in step S56), the controller 80 determines that the sensor 70 is running normally (step S57). After determining that the sensor 70 is normal, the controller 80 performs again from the acquisition of output of the grip sensor 221 (return to step S51). It may be performed continuously; however, it may also be performed in a regular cycle.

When the acquired absolute value of the output value of the sensor 70 exceeds the threshold (NO in step S56), the controller 80 may determine there is a failure (error) in the sensor 70 (step S58). Then, the controller 80 may notify an error (step S59) of the sensor 70 and deactivate the assist function (step S510).

As described above, when the manually propelled vehicle 1 is stationary, the operation verification of the sensor 70 can be performed. Therefore, the user can be prevented from using the manually propelled vehicle 1 with the problem. Accordingly, one or more embodiments of the present invention can assist the operation by the user more safely and more accurately.

When determining whether the manually propelled vehicle 1 is stationary from the output of the motion sensor 60 (step S54), the controller 80 may determine whether the absolute value of the output value exceeds the threshold. Further, at that time, the controller 80 may count a number of repeated times to determine whether the manually propelled vehicle 1 is stationary, and when the determination of stationary is repeated a predetermined number of times or more, it may be determined that there is a failure (error) in the motion sensor 60. Accordingly, detection of a failure in the motion sensor 60 and the sensor 70 becomes possible.

The characteristics other than this may be the same as the characteristics of one or more embodiments of the first example to one or more embodiments of the third example.

One or more embodiments of the manually propelled vehicle 1 may be used in those for assisting a wheelchair or the like, or carrying a heavy load such as a dolly. It can widely include a configuration that can transfer assisting force to a wheel and assisting an operating force of a user.

Various embodiments of the present invention have been described; however, the present invention is not limited to these contents. Also, the features of these embodiments can be used in various combinations with each other, and are not intended to be limited to the specific combinations disclosed herein. Further, the embodiments of the present invention can add various modifications without departing from the scope of the invention.

Although the disclosure has been described with respect to only a limited number of embodiments, those skilled in the art, having benefit of this disclosure, will appreciate that various other embodiments may be devised without departing from the scope of the present invention. Furthermore, those of ordinary skill in the art would appreciate that certain "units," "parts," "elements," or "portions" of one or more embodiments of the present invention may be implemented by a circuit, processor, etc. using known methods.

Accordingly, the scope of the invention should be limited only by the attached claims.

### [Description of the Reference Numerals]

- 1: manually propelled vehicle
- 10: vehicle body
- 11: supporting member
- 20: handle
- 21: handlebar
- 22: grip
- 221: grip sensor
- 23: handle holder
- 231: front wall
- 232: rear wall
- 233: screw member
- 30: wheel system
- 31 (31L, 31R): drive wheel
- 32 (32L, 32R): idler wheel
- 40: baggage compartment
- 50: backrest
- 60: motion sensor
- 61: acceleration sensor
- 62: gyro sensor
- 63: distance measuring sensor
- 70: sensor
- 71: force sensor
- 80: controller
- 801: processor
- 802: wheel drive controller
- 81: memory
- 82: timer
- 90: power driver
- 91L, 91R: wheel driver
- 911L, 911R: motor
- 612L, 912R: motor driver
- 913L, 913R: current sensor
- 914L, 914R: rotation angle sensor
- 100: power source
- 10: power assist device

## Claims

1. A manually propelled vehicle having an assist function that assists walking of a user, comprising:
a vehicle body (10);
a wheel system (30) for moving the vehicle body;
a sensor (70) that detects an operating force;
a power driver (90) that supplies power to the wheel system (30) based on the operating force;
a motion sensor (60) that detects a movement of the vehicle body (10) according to the operating force detected by the sensor (70); and
a controller (80) that controls the power driver (90), wherein,
when the user operates the manually propelled vehicle (1) while the assist function is deactivated, the controller (80) activates the assist function based on the movement of the vehicle body (10) detected by the motion sensor (60).

2. The manually propelled vehicle according to claim 1, further comprising a rotation angle sensor (914L, 914R) that detects rotation of the wheel system (30), wherein the controller (80) activates the assist function when the rotation angle sensor detects that the wheel system (30) has rotated a predetermined amount from a stationary state of the manually propelled vehicle.

3. The manually propelled vehicle according to claim 1, further comprising a rotation angle sensor (914L, 914R) that detects rotation of the wheel system (30), wherein the controller (80) activates the assist function after a predetermined time has elapsed from a stationary state of the manually propelled vehicle (1).

4. The manually propelled vehicle according to any of claim 1 to 3, wherein the power from the power driver (90) is not transferred to the wheel system (30) when the assist function is deactivated.

5. The manually propelled vehicle according to claim 4, further comprising a switch that cuts off the power from the power driver (90) so that the power is not transferred to the wheel system (30) when the assist function is deactivated.

6. The manually propelled vehicle according to any of claims 1 to 5, wherein the controller (80) detects the operating force detected by the sensor (70) or the movement of the vehicle body (10) detected by the motion sensor (60) while the assist function is activated, and deactivates the assist function when a periodic fluctuation associated with walking by the user is not verified in at least one of either the detected operating force or the movement of the vehicle body (1).

7. The manually propelled vehicle according to any of claims 1 to 6, further comprising:
a grip (22) for the user to grip while operating the manually propelled vehicle; and
a grip sensor (221) that detects when the user grips the grip, wherein
if the grip sensor (221) does not detect gripping of the grip (22) and the motion sensor (60) does not detect movement of the vehicle body (10), the controller (80) activates the assist function when the operating force detected by the sensor is within a predetermined range.

8. The manually propelled vehicle according to any of claims 1 to 7, further comprising:
a grip (22) for the user to grip while operating the manually propelled vehicle; and
a grip sensor (221) that detects when the user grips the grip, wherein
if the grip sensor (221) does not detect gripping of the grip (22), the controller (80) deactivates the assist function when the motion sensor (60) repeatedly and continuously detects movement of the vehicle body for a predetermined number of times.

9. A manually propelled vehicle having an assist function that assists walking of a user, comprising:
a vehicle body (10);
a wheel system (30) to move the vehicle body;
a sensor (70) that detects an operating force;
a power driver (90) that supplies power to the wheel system (30) based on the operating force;
a motion sensor (60) that detects a movement of the vehicle body (10); and
a controller (80) that controls the power driver (90), wherein
the controller (80) detects the operating force detected by the sensor (70) or the movement of the vehicle body detected by the motion sensor (60) while the assist function is activated, and deactivates the assist function when a periodic fluctuation associated with walking by the user is not verified in at least one of either the detected operating force or the movement of the vehicle body (10).

10. A method for controlling a manually propelled vehicle (1) comprising an assist function that assists walking of a user, a vehicle body (10) and a wheel system (30) for moving the vehicle body, the method comprising:
detecting an operating force;
supplying power to the wheel system based on the operating force;
detecting a movement of the vehicle body (1) according to the detected operating force;
controlling the power driver (90); and
when the user operates the manually propelled vehicle (1) while the assist function is deactivated, activating the assist function based on the detected movement of the vehicle body (10).

11. The method according to claim 10, further comprising detecting rotation of the wheel system (30) and activating the assist function when the detecting of the rotation detects that the wheel system has rotated a predetermined amount from a stationary state of the manually propelled vehicle (1).

12. The method according to claim 10, further comprising detecting rotation of the wheel system (30) and activating the assist function when the detecting of the rotation detects that a predetermined time has elapsed from a stationary state of the manually propelled vehicle (1).

13. The method according to any of claims 10 to 12, further comprising cutting off the power to the wheel system (30) when the assist function is deactivated.

14. The method according to any of claims 10 to 13, further comprising detecting the operating force detected or the movement of the vehicle body (10) while the assist function is activated, and deactivating the assist function when a periodic fluctuation associated with walking by the user is not verified in at least one of either the detected operating force or the movement of the vehicle body (10).

15. The method according to any of claims 10 to 14, further comprising:
detecting when the user grips a grip (22) to operate the manually propelled vehicle (1); and
if neither gripping of the grip (22) nor the movement of the vehicle body (10) is detected, activating the assist function when the detected operating force is within a predetermined range.
